# FASCICULE DE BREVET EUROPEEN

(11) **EP 3 575 056 B1**
(45) Date de publication et mention de la délivrance du brevet: **14.04.2021**
(21) Numéro de dépôt: 19175149.4
(22) Date de dépôt: 17.05.2019
(51) Int. Cl.: B29C 45/00, B29C 43/02, B05B 11/00, B29L 31/00, B29L 31/56, B29C 43/52

(54) **PROCÉDÉ DE FABRICATION D'UNE TIGE DE GUIDAGE D'UNE POMPE**
HERSTELLUNGSVERFAHREN EINES FÜHRUNGSSTABS EINER PUMPE
METHOD FOR MANUFACTURING A GUIDING ROD FOR A PUMP

(30) Priorité: 31.05.2018 FR 1854672
(43) Date de publication de la demande: 04.12.2019
(73) Titulaire: Albéa Services, 92230 Gennevilliers (FR)
(72) Inventeur: ROSSIGNOL, Eric, 71100 Chalon sur Saone (FR)
(74) Mandataire: Gevers & Orès

(56) Documents cités:
- EP-A1- 0 354 137
- WO-A1-2014/070877
- FR-A1- 2 957 839

## Description

### Domaine de l'invention

L'invention concerne un procédé de fabrication d'une tige de guidage pour une pompe de distribution d'un produit fluide, notamment utilisée dans un flacon de produit cosmétique.

Certains flacons de produits cosmétiques sont pourvus d'une pompe configurée pour aspirer le produit cosmétique contenu dans le réservoir du flacon afin de le distribuer, par exemple au moyen d'une buse ou par une simple ouverture. Le produit peut ainsi être extrait ou pulvérisé du flacon afin de permettre son application. La pompe est souvent actionnée au moyen d'un bouton-poussoir sur lequel l'utilisateur exerce une pression pour déclencher le fonctionnement de la pompe. Une pompe comprend en particulier une chambre de pompage dont le volume varie pour permettre l'aspiration du produit dans la chambre par un orifice d'entrée, lorsque le volume augmente, puis son expulsion en dehors de la chambre par un orifice de sortie, lorsque le volume de la chambre diminue. Le produit sort de la chambre dans un conduit de distribution, qui le mène à l'ouverture ou la buse habituellement agencée sur le bouton-poussoir.

On connait différentes sortes de pompes, notamment des pompes dont la chambre de pompage est définie en grande partie par une membrane flexible. Le volume de la chambre est contrôlé par déformation de la membrane. En configuration non déformée de la membrane, le volume de la chambre est maximal. Lorsque la membrane est déformée, le volume de la chambre diminue, de préférence jusqu'à un volume assez faible pour qu'un maximum de produit sorte de la chambre.

Les éléments de la pompe sont de préférence conçus en matériau plastique.

La membrane déformable est faite d'un seul tenant dont la déformation est guidée pour assurer un repliement optimal, sans devoir contraindre la membrane dans un compartiment ou lui donner une forme complexe. Pour cela, la pompe comporte une tige de guidage traversant la membrane, la membrane glissant le long de la tige lorsqu'elle subit ladite déformation de sorte que la membrane est retenue radialement par rapport à la tige, et elle se déplace seulement selon l'axe de la tige. La tige de guidage permet ainsi de guider la membrane lorsqu'elle subit la déformation, et d'éviter que la membrane ne se plie d'une manière dommageable pour la pompe.

Cette tige de guidage comporte une tête de guidage présentant des rebords par rapport au corps de la tige sur lequel coulisse la membrane. Cette tête fait office de butée haute pour la membrane.

La base de la tige est généralement reliée à un support sur lequel repose la membrane.

### Etat de la technique

L'ensemble tige / support est obtenu par injection plastique, avec un moule comportant deux tiroirs mobiles de part et d'autre de la tige et formant en particulier les rebords de la tête de la tige de guidage. Un tel moule est connu de l'art antérieur.

Lors du démoulage, la tige ne peut pas être démoulée dans une seule plaque. En effet, le démoulage est rendu impossible par les rebords de la tête. En conséquence, le moule comprend deux tiroirs qui se retirent latéralement relativement à l'axe de la tige pour libérer la tige et sa tête. La tige démoulée comprend alors un plan de joint qui s'étend sur toute la longueur à la localisation de la jonction entre les deux tiroirs. Ce plan de joint est une ligne dont l'épaisseur radiale peut atteindre plusieurs centièmes de millimètre, ce qui suffit à détériorer de manière préjudiciable l'étanchéité de la liaison de la membrane souple avec la tige de guidage.

D'autre part, un moule doté de tiroirs mobiles est compliqué à réaliser et cher.

Le document WO 2014/070877 A1 révèle un procédé de fabrication d'un tube plongeur pour une pompe de distribution d'un produit fluide, ledit tube plongeur comportant un corps cylindrique surmonté d'une tête, ledit procédé comportant les étapes suivantes :
- une étape de moulage par injection plastique pour former le tube plongeur cylindrique ;
- une étape de correction de forme, par surmoulage, d'une extrémité supérieure du tube plongeur de manière à former ladite tête en créant un épaulement au niveau de la jonction entre la tête et le corps de tube plongeur.

L'objectif de la présente invention consiste à modifier le procédé de fabrication en simplifiant la pièce moulée, à savoir la tige, et en la retravaillant lors d'une deuxième étape.

### Résumé de l'invention

La présente invention a pour objectif de pallier les différents inconvénients énoncés ci-dessus, au moyen d'un procédé de fabrication d'une tige de guidage pour une pompe de distribution d'un produit fluide, ladite tige comportant un corps cylindrique surmonté d'une tête.

Ce procédé de fabrication se caractérise à titre principal en ce qu'il comporte les étapes suivantes :
- une étape de moulage par injection plastique pour former la tige cylindrique ;
- une étape de correction de forme, sans ajout de matière, d'une extrémité supérieure de la tige de manière à former ladite tête en créant un épaulement au niveau de la jonction entre la tête et le corps de tige.

De façon avantageuse, l'injection plastique consiste en une mono-injection.

De façon avantageuse, l'injection plastique est réalisée au moyen d'un moule à une seule plaque. Un tel moule ne comprend pas de tiroirs.

De façon avantageuse, le démoulage de la tige s'effectue en une seule opération. Ainsi un mouvement latéral de parties moulantes telles des tiroirs relativement à l'axe de la tige n'est pas nécessaire.

L'idée principale de cette invention consiste à mouler une tige de guidage cylindrique dépourvue de tête de retenue. L'extrémité supérieure de la tige possède alors une géométrie cylindrique qu'il est possible de démouler facilement à l'aide d'un moule, sans tiroirs, avec une seule plaque dédiée au moulage de la tige. Un tel moule est moins cher, ce qui présente un réel avantage économique.

Puisque la tige ne présente plus de plan de joint, il n'existe plus de risque de détérioration de l'étanchéité de la liaison de la membrane souple avec la tige de guidage. Le fonctionnement de la pompe est ainsi amélioré.

La tête de tige sera ensuite formée lors de l'étape ultérieure de correction de forme. Cette étape de correction de forme s'effectue sans ajout de matière. C'est l'extrémité supérieure de la tige en elle-même qui se déforme et qui devient une tête.

Selon une première configuration possible, la forme de la tête de tige est réalisée à chaud par bouterollage lors de l'étape de correction de forme.

Cette étape de correction de forme comprend une phase de chauffage de l'extrémité supérieure de la tige jusqu'à fusion de la matière plastique, puis une phase de repoussage de la matière en fusion.

Lors de l'étape de correction de forme par bouterollage, l'extrémité supérieure de la tige est mise en contact avec une surface chauffante d'un outil de bouterollage présentant un axe central X, ladite tige étant disposée dans le prolongement de cet axe X.

Cette surface chauffante est plane.

Cette surface chauffante peut présenter une cavité chauffante dans laquelle l'extrémité supérieure de la tige est insérée.

De préférence, ladite cavité présente une forme hémisphérique pour former une tête d'allure hémisphérique. Toute autre forme de tête peut être envisagée, à partir du moment où elle présente un rebord ou un épaulement par rapport au corps, de manière à pouvoir retenir la membrane déformable par la suite.

Lors de la phase de repoussage, quel que soit le profil de la surface chauffante, l'outil de bouterollage se déplace en translation selon l'axe X en direction de la tige de manière à exercer une pression sur la tête de tige en fusion, entraînant un déplacement de la matière en fusion le long du corps de tige dans le sens de déplacement de l'outil de bouterollage de manière à former l'épaulement entre la tête et le corps de tige.

Optionnellement, le corps de tige est serré dans un mors, et l'extrémité supérieure de la tige est repoussée jusqu'à ce que la face inférieure de la tête en formation vienne s'écraser sur une face plane supérieure du mors, de façon à ce que la face inférieure de la tête soit plane. Cette face inférieure de la tête forme ledit épaulement.

Selon une deuxième configuration possible, la forme de la tête de tige est réalisée à froid par repoussage de la matière de l'extrémité supérieure de la tige lors de l'étape de correction de forme.

L'extrémité supérieure de la tige est disposée en vis-à-vis d'un outil de repoussage conçu dans un matériau plus résistant que le plastique, du type métal, et dont la surface en vis-à-vis de l'extrémité supérieure de la tige présente une arête annulaire tranchante d'un diamètre inférieur au diamètre nominal de la tige, ainsi qu'une gorge annulaire entourant l'arête annulaire, l'outil de repoussage présentant un axe central X, ladite tige étant disposée dans le prolongement de cet axe X.

De façon avantageuse, l'outil de repoussage se déplace en translation selon l'axe X en direction de la tige jusqu'à trancher la matière sur l'extrémité supérieure de la tige selon une course prédéfinie, la matière excédentaire découpée venant se loger dans la gorge annulaire de l'outil de repoussage de manière à former la tête de la tige avec un épaulement par rapport au corps.

La matière excédentaire prend la forme de la gorge annulaire.

Après l'étape de correction de forme, le diamètre maximal de la tête de la tige est supérieur au diamètre nominal de la tige. Il existe donc bien un épaulement, contre lequel la membrane pourra venir en butée.

Avantageusement, le procédé de fabrication comporte une étape supplémentaire d'insertion de la tige dans une cheminée prévue à cet effet dans une membrane souple appartenant à la pompe, ladite étape d'insertion étant réalisée entre l'étape d'injection et l'étape de correction de forme. Cela permet d'insérer la tige dans la membrane sans abimer cette dernière, et ainsi garantir une étanchéité optimale entre la tige et la membrane.

### Présentation des figures

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés.

Sur ces dessins :
- la figure 1 est une vue en coupe d'une pompe à membrane déformable guidée par une tige de guidage ;
- la figure 2 est une vue en perspective d'un ensemble tige / support tel que représenté en figure 1 ;
- la figure 3 est une vue en coupe de l'ensemble tige / support correspondant à la figure 2 ;
- la figure 4 est une vue en coupe d'une tige dans un moule à deux tiroirs selon l'art antérieur ;
- les figures 5a à 5c montrent les différentes étapes du procédé de fabrication de la tête de tige selon une première configuration de l'invention ;
- la figure 6 illustre en perspective un outil de repoussage ;
- les figures 7a à 7d montrent les différentes étapes du procédé de fabrication de la tête de tige selon une deuxième configuration de l'invention ;
- les figures 8a à 8c montrent les différentes étapes du procédé de fabrication de la tête de tige selon la première configuration de l'invention, avec une variante.

### Description détaillée

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

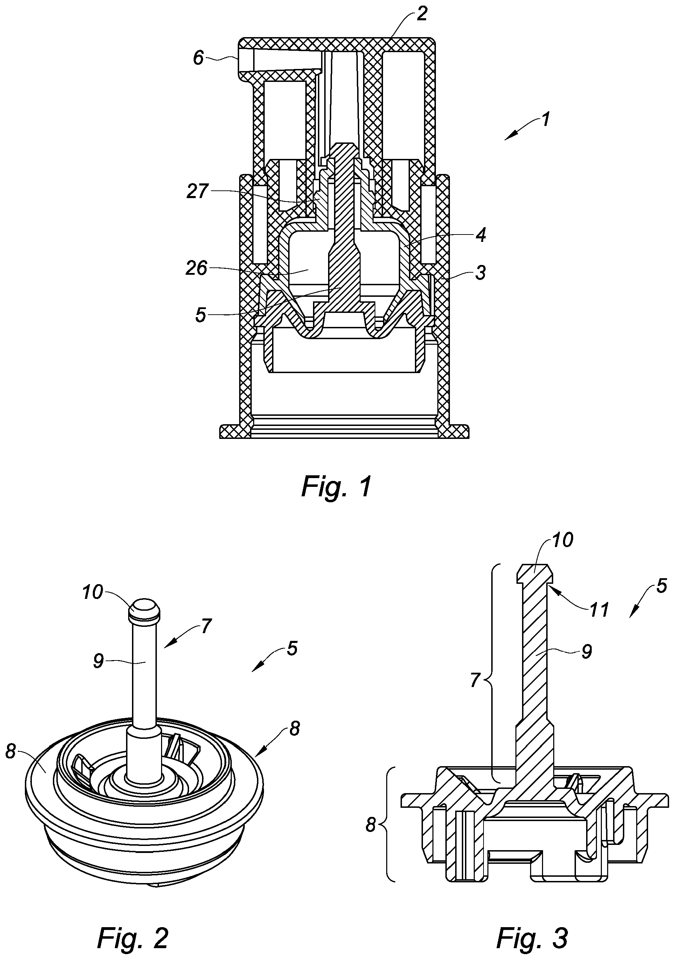

La figure 1 montre une pompe 1 pour réceptacle, notamment un flacon destiné à contenir un produit cosmétique. La pompe 1 comprend un bouton-poussoir 2, un manchon 3, une membrane 4 déformable, et un ensemble 5 formé d'une tige 7 et d'un support 8.

Le bouton-poussoir 2 a pour fonction de permettre l'actionnement de la pompe 1 par un utilisateur. Le bouton-poussoir 2 a ici un corps cylindrique muni d'une ouverture 6 de distribution du produit et d'une paroi supérieure d'appui sur laquelle l'utilisateur exerce une pression pour actionner la pompe 1, le bouton-poussoir 2 s'insérant dans le manchon 3 pendant l'actionnement.

La pompe 1 comporte en outre une chambre 26 de pompage à volume variable définie au moins en partie par la membrane 4 déformable. La pompe 1 fonctionne en faisant varier le volume de la chambre 26 par déformation élastique de la membrane 4 entre un état initial en forme de dôme représenté sur la figure 1 dans lequel la chambre 26 a un volume maximal, et un état déformé (non représenté) dans lequel le volume de la chambre 26 est minimal.

La membrane 4 déformable repose sur le support 8. La tige 7 de l'ensemble 5, correspond à une tige 7 de guidage de la membrane 4 qui s'étend depuis le support 8. Cette tige 7 est disposée sensiblement selon l'axe du manchon 3. La tige 7 de guidage traverse la membrane 4 et sort par une cheminée présente au sommet du dôme, de sorte que la membrane 4 glisse le long de la tige 7 lorsqu'elle subit ladite déformation, la tige 7 traversant la chambre 26 sensiblement selon l'axe longitudinal de la chambre 26. La tige 7 a pour fonction de guider la membrane 4 lorsqu'elle passe de l'état initial à l'état déformé, puis de l'état déformé à l'état initial. Le dôme est ainsi configuré pour pouvoir replier son sommet vers sa base.

De façon plus visible en figures 2 et 3, la tige 7 comporte un corps 9 cylindrique et surmonté, au niveau d'une extrémité libre supérieure, d'une tête 10. Il existe un épaulement 11 radial entre le corps 9 et la tête 10, de façon à créer un rebord 11 contre lequel la membrane 4 vient en butée. Ainsi, la membrane 4 ne peut pas passer au-delà de l'extrémité de la tige 7, car elle est retenue par le rebord 11. La tête 10 a une allure de champignon.

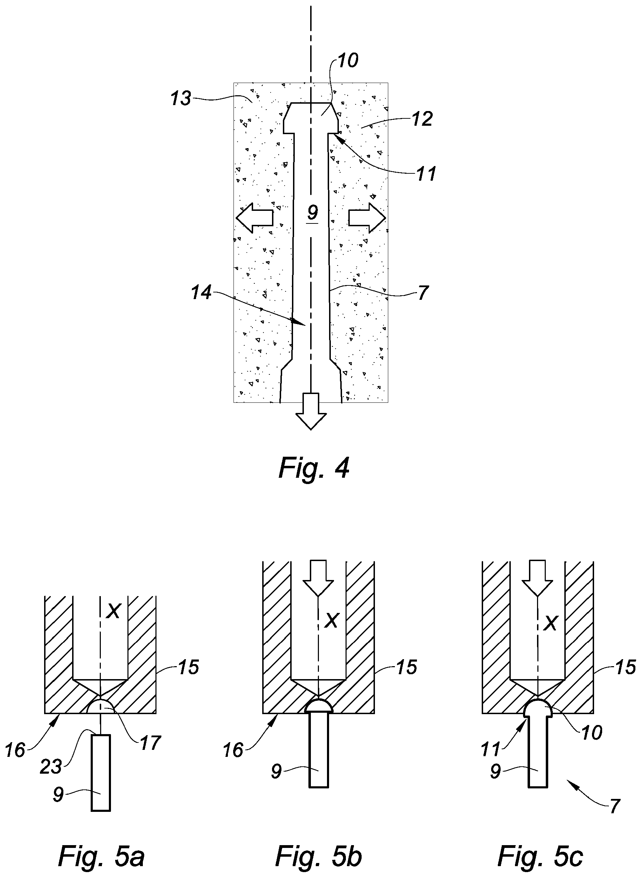

Comme illustré en figure 4, le corps 9 et la tête 10, formant la tige 7 complète, sont généralement moulés dans un moule comprenant deux tiroirs 12, 13 qui se retirent latéralement relativement à l'axe de la tige 7 pour libérer la tige 7 et sa tête 10, comme illustré par les flèches pleines. En effet, un démoulage avec une seule plaque, sans tiroirs, est rendue impossible par les rebords 11 de la tête 10, car la direction de retrait de la tige 7 est axiale, comme illustré par la flèche creuse.

Ainsi, la tige 7 démoulée comprend un plan de joint 14 qui s'étend sur toute la longueur de la tige 7, au niveau de la jonction entre les deux tiroirs 12,13, comme représenté par les traits en pointillés.

Dans la présente invention, la tige 7 ne présente plus de plan de joint. En effet, dans le procédé de fabrication de la tige 7, il existe d'abord une étape d'injection plastique qui permet de fabriquer le corps 9 cylindrique de la tige 7 de guidage. Ce corps 9 est entièrement cylindrique, d'une extrémité à l'autre. Il est dépourvu de tête 10. Il est donc possible de le mouler à l'aide d'un moule à une seule plaque, sans tiroirs. Puisqu'il n'existe pas de tête 10, le corps 9 cylindrique peut être retiré axialement au démoulage, avec facilité, en une seule opération.

Le corps 9 de la tige 7 ne présente donc aucune aspérité en surface due au moulage. Il est lisse et uniforme.

L'injection plastique consiste en une mono injection de préférence.

Une fois l'étape de moulage/démoulage terminé, s'ensuit une étape de correction de forme de son extrémité supérieure 23 de manière à former la tête 10 de la tige 7.

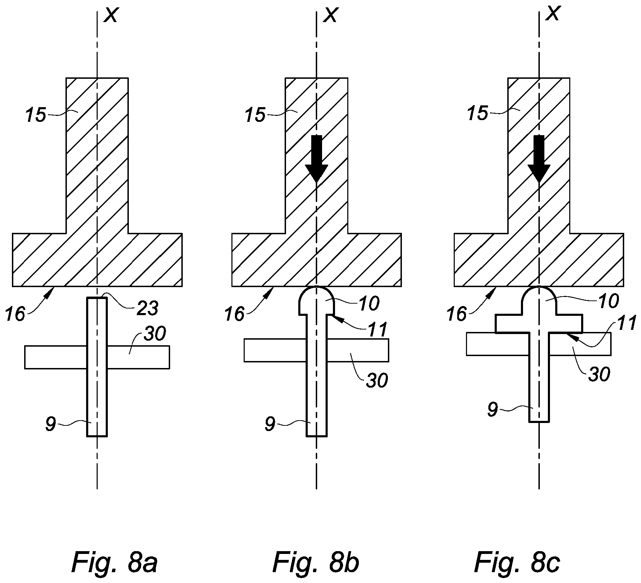

Selon une première configuration possible, telle que représentée aux figures 5a à 5c, et 8a à 8c, cette correction s'effectue par un procédé de bouterollage. Ce procédé comprend une phase de chauffage de la tête 10 de la tige 7 jusqu'à fusion de la matière plastique, puis une phase de repoussage de la matière en fusion.

Pour se faire, on utilise un outil de bouterollage 15 qui consiste en une pièce chauffante présentant une extrémité libre disposée en vis-à-vis de l'extrémité supérieure 23 de la tige 7. La pièce chauffante et la tige 7 sont alignées selon un même axe central X.

L'extrémité libre de la pièce chauffante 15 présente une surface plane 16.

Sur la figure 8a, l'outil de bouterollage 15 est disposé à distance de l'extrémité supérieure 23 de la tige 7.

Sur la figure 8b, l'outil de bouterollage 15 est déplacé axialement selon l'axe X jusqu'à ce que l'extrémité supérieure 23 de la tige 7 touche la surface chauffante 16 plane de l'outil de bouterollage 15. Il serait également envisageable de déplacer axialement la tige 7, tandis que l'outil de bouterollage 15 reste fixe.

L'extrémité supérieure 23 de la tige 7 se met alors à chauffer, jusqu'à ce que sa matière entre en fusion, et se déforme sous l'effet de la chaleur. La matière de l'extrémité coule vers le bas, et vient former un chapeau, qui correspond à une tête 10. On obtient alors une tige 7 avec une extrémité libre de forme arrondie. Le dessous du chapeau forme un épaulement 11 avec le corps 9 de la tige 7.

Pour augmenter cet épaulement et le rendre bien droit, il est possible, dans une étape suivante illustrée en figure 8c, de maintenir le corps 9 de tige 7 serré dans un mors 30, et de continuer à déplacer axialement l'outil de bouterollage 15 pour repousser encore la tête en formation jusqu'à ce que sa face inférieure vienne s'écraser sur une face plane supérieure du mors 30, de façon à ce que la face inférieure de la tête 10 soit plane. Dans ce cas, l'épaulement 11 est bien marqué au niveau de la jonction entre la tête 10 et le corps 9 de la tige 7.

Dans une variante, la surface plane 16 de l'extrémité libre de la pièce chauffante présente une cavité 17 de forme hémisphérique, correspondant à la future forme de la tête 10 de la tige 7.

Sur la figure 5a, l'outil de bouterollage 15 est disposé à distance de l'extrémité supérieure 23 de la tige 7.

En figure 5b, l'outil de bouterollage 15 est déplacé axialement jusqu'à ce que l'extrémité supérieure 23 de la tige 7 s'insère à l'intérieur de la cavité 17 de l'outil de bouterollage 15. Il serait également envisageable de déplacer axialement la tige 7, tandis que l'outil de bouterollage 15 reste fixe.

L'extrémité supérieure 23 de la tige 7 se met alors à chauffer, jusqu'à ce que sa matière entre en fusion, et se déforme de manière à prendre la forme de la cavité 17. On obtient alors une tige 7 avec une extrémité libre de forme arrondie, voire hémisphérique. Tout autre forme de cavité 17, et donc de tête 10, est envisageable.

En figure 5c, l'outil de bouterollage 15 est déplacé axialement à nouveau, selon une petite course prédéfinie, et en direction de la tige 7, de manière à exercer une pression sur la tête 10 de la tige 7 en fusion, ce qui entraîne un déplacement de la matière en fusion le long du corps 9 de la tige 7 dans le sens de déplacement de l'outil de bouterollage 15. Cela permet de remplir l'intégralité de la cavité 17 avec de la matière en fusion.

On obtient alors une tête 10 de forme hémisphérique, avec un rebord 11 bien prononcé par rapport au corps 9. En effet, le diamètre maximal de la cavité 17 est supérieur au diamètre du corps 9 de tige 7. Par conséquent, il existe un épaulement 11 entre le corps 9 et la tête 10 de tige 7, correspondant au rebord 11 contre lequel viendra en butée la membrane 4 de la pompe 1.

De la même manière que précédemment, pour augmenter cet épaulement et le rendre bien droit, il est possible, dans une étape suivante, non illustrée mais équivalente à la figure 8c, de maintenir le corps 9 de tige 7 serré dans un mors 30, et de continuer à déplacer axialement l'outil de bouterollage 15 pour repousser encore la tête en formation jusqu'à ce que sa face inférieure vienne s'écraser sur une face plane supérieure du mors 30, de façon à ce que la face inférieure de la tête 10 soit plane. Dans ce cas, l'épaulement 11 est bien marqué au niveau de la jonction entre la tête 10 et le corps 9 de de la tige 7.

L'outil de bouterollage peut être une sonotrode d'une soudeuse à ultrason. L'énergie des ultrasons provoque le chauffage de l'extrémité supérieure 23 de la tige 7.

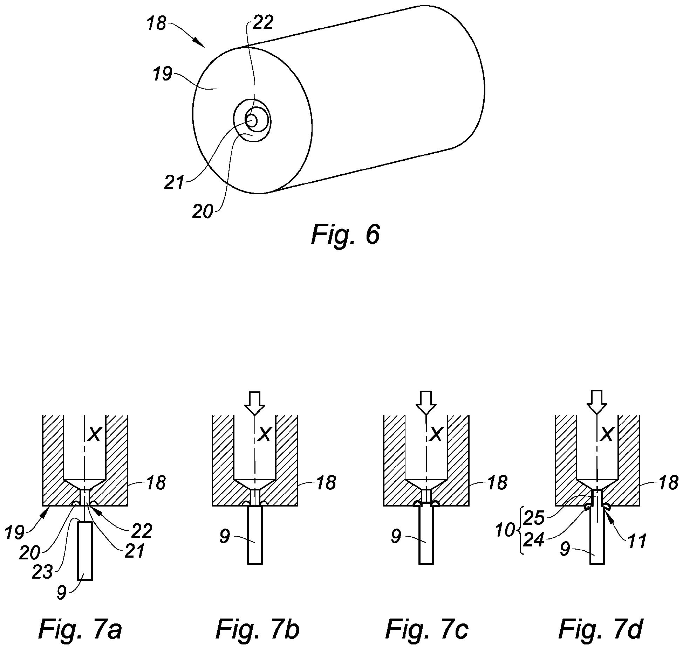

Selon une seconde configuration possible, telle que représentée aux figures 7a à 7d, cette correction s'effectue à froid par repoussage de la matière de l'extrémité supérieure 23 de la tige 7.

Pour cela, on utilise un outil de repoussage 18, visible en figure 6, et conçu dans un matériau plus résistant que le plastique, du type métal. Cet outil 18 consiste en une pièce cylindrique présentant une extrémité libre disposée en vis-à-vis de l'extrémité supérieure 23 de la tige 7. L'outil de repoussage 18 et la tige 7 sont alignés selon un même axe central X. L'extrémité libre de cet outil de repoussage 18 présente une surface plane 19 dans laquelle est creusée une gorge 20 de forme annulaire entourant un orifice 21 central. La matière métallique restante au niveau de la jonction entre la gorge 20 et l'orifice 21 central est suffisamment fine pour former une arête 22 annulaire tranchante, à la manière d'une lame. Le diamètre de cette arête 22 annulaire est inférieur au diamètre du corps 9 de la tige 7.

Sur la figure 7a, l'outil de repoussage 18 est disposé à distance de l'extrémité supérieure 23 de la tige 7.

En figure 7b, l'outil de repoussage 18 est déplacé axialement jusqu'à ce que l'extrémité supérieure 23 de la tige 7 vienne au contact de l'arête 22 tranchante. Il serait également envisageable de déplacer axialement la tige 7, tandis que l'outil de repoussage 18 reste fixe.

Puis l'outil de repoussage 18 est déplacé axialement selon une course prédéfinie, et en direction de la tige 7, jusqu'à trancher la matière de l'extrémité supérieure 23 de la tige 7, comme illustré aux figures 7c et 7d. La partie centrale 25 de l'extrémité supérieure 23 de la tige 7 pénètre ainsi dans l'orifice 21 central de l'outil de repoussage 18, tandis que la partie périphérique 24 de l'extrémité supérieure 23 de la tige 7 consiste en de la matière excédentaire 24 découpée qui vient alors se loger dans la gorge 20 annulaire de l'outil de repoussage 18.

Au fur et à mesure de l'avancement de l'outil de repoussage 18 par rapport à la tige 7, cette matière excédentaire 24 pénètre dans la gorge 20 et vient se recourber selon la forme de la gorge 20. La matière excédentaire 24 forme alors une couronne annulaire surplombant le corps 9 de tige 7, et formant ainsi un rebord 11 par rapport au corps 9 de tige 7.

Dans ce cas, la tête 10 de tige 7 correspond, non pas à un champignon, mais à un téton 25 entouré d'une couronne 24. Il existe donc bien un épaulement 11 entre cette tête 10 de tige 7 et le corps 9 de tige 7.

D'autres formes de gorge 20 et de couronne peuvent être envisagées.

De façon pratique, après l'étape de moulage par injection plastique de l'ensemble 5 support 8 / tige 7, il existe l'étape d'insertion de la tige 7 cylindrique dans la cheminée 27 prévue à cet effet dans la membrane 4 souple déformable appartenant à la pompe 1. Une fois que la tige 7 est insérée dans la membrane 4, on peut passer à l'étape de correction de forme de manière à créer la tête 10 de tige 7, et de manière à ce que la membrane 4 ne puisse plus sortir au-delà de la tête 10 de tige 7. Ainsi, la membrane 4 est emprisonnée entre le support 8 et la tête 10 de tige 7.

A l'issue de l'étape d'insertion, un tube est positionné selon l'axe de la tige 7 et appuie sur la membrane 4 souple déformable pour que celle-ci, en l'absence de tête de tige, soit maintenue en position comprimée. L'outil de bouterollage ou l'outil de repoussage est introduit à l'intérieur dudit tube et glisse le long de celui-ci jusqu'à l'extrémité 23 de la tige 7 pour réaliser l'opération de correction de forme.

Les configurations montrées aux figures citées ne sont que des exemples possibles, nullement limitatifs, de l'invention qui englobe au contraire les variantes de formes et de conceptions couvertes par les revendications et à la portée de l'homme de l'art.

## Revendications

1. Procédé de fabrication d'une tige (7) de guidage pour une pompe (1) de distribution d'un produit fluide, ladite tige (7) comportant un corps (9) cylindrique surmonté d'une tête (10), ledit procédé comportant les étapes suivantes :
- une étape de moulage par injection plastique pour former la tige (7) cylindrique ;
- une étape de correction de forme, sans ajout de matière, d'une extrémité supérieure (23) de la tige (7) de manière à former ladite tête (10) en créant un épaulement (11) au niveau de la jonction entre la tête (10) et le corps (9) de tige (7).

2. Procédé selon la revendication précédente, **caractérisé en ce que** l'injection plastique consiste en une mono-injection.

3. Procédé selon l'une des revendications précédentes, **caractérisé en ce que** l'injection plastique est réalisée au moyen d'un moule à une seule plaque.

4. Procédé selon l'une des revendications précédentes, **caractérisé en ce que** le démoulage de la tige (7) s'effectue en une seule opération.

5. Procédé selon l'une des revendications précédentes, **caractérisé en ce que** la forme de la tête (10) de tige (7) est réalisée à chaud par bouterollage lors de l'étape de correction de forme.

6. Procédé selon la revendication précédente, **caractérisé en ce que** l'étape de correction de forme comprend une phase de chauffage de l'extrémité supérieure (23) de la tige (7) jusqu'à fusion de la matière plastique, puis une phase de repoussage de la matière en fusion.

7. Procédé selon la revendication précédente, **caractérisé en ce que**, lors de l'étape de correction de forme par bouterollage, l'extrémité supérieure (23) de la tige (7) est mise en contact avec une surface (16) chauffante d'un outil de bouterollage (15) présentant un axe central (X), ladite tige (7) étant disposée dans le prolongement de cet axe (X).

8. Procédé selon la revendication précédente, **caractérisé en ce que** la surface Z (16)
chauffante est plane.

9. Procédé selon la revendication 7, **caractérisé en ce que** la surface chauffante (16) présente une cavité chauffante (17) dans laquelle l'extrémité supérieure (23) de la tige (7) est insérée.

10. Procédé selon la revendication précédente, **caractérisé en ce que** ladite cavité (17) présente une forme hémisphérique pour former une tête (10) d'allure hémisphérique.

11. Procédé selon l'une des revendications 7 à 10, **caractérisé en ce que**, lors de la phase de repoussage, l'outil de bouterollage (15) se déplace en translation selon l'axe (X) en direction de la tige (7) de manière à exercer une pression sur la tête (10) de tige (7) en fusion, entraînant un déplacement de la matière en fusion le long du corps (9) de tige (7) dans le sens de déplacement de l'outil de bouterollage (15) de manière à former l'épaulement (11) entre la tête (10) et le corps (9) de tige (7).

12. Procédé selon la revendication précédente, **caractérisé en ce que** le corps (9) de tige (7) est serré dans un mors (30), et l'extrémité supérieure (23) de la tige (7) est repoussée par l'outil de bouterollage (15) jusqu'à ce que la face inférieure de la tête en formation vienne s'écraser sur une face plane supérieure du mors (30), de façon à ce que la face inférieure de la tête soit plane et forme ledit épaulement (11).

13. Procédé selon l'une des revendications 1 à 4, **caractérisé en ce que** la forme de la tête (10) de tige (7) est réalisée à froid par repoussage de la matière de l'extrémité supérieure (23) de la tige (7) lors de l'étape de correction de forme.

14. Procédé selon la revendication précédente, **caractérisé en ce que** l'extrémité supérieure (23) de la tige (7) est disposée en vis-à-vis d'un outil de repoussage (18) conçu dans un matériau plus résistant que le plastique, du type métal, et dont la surface (19) en vis-à-vis de l'extrémité supérieure (23) de la tige (7) présente une arête (22) annulaire tranchante d'un diamètre inférieur au diamètre nominal de la tige (7), ainsi qu'une gorge (20) annulaire entourant l'arête (22) annulaire, l'outil de repoussage (18) présentant un axe central (X), ladite tige (7) étant disposée dans le prolongement de cet axe (X).

15. Procédé selon la revendication précédente, **caractérisé en ce que** l'outil de repoussage (18) se déplace en translation selon l'axe (X) en direction de la tige (7) jusqu'à trancher la matière sur l'extrémité supérieure (23) de la tige (7) selon une course prédéfinie, la matière excédentaire (24) découpée venant se loger dans la gorge (20) annulaire de l'outil de repoussage (18) de manière à former la tête (10) de la tige (7) avec un épaulement (11) par rapport au corps (9).

16. Procédé selon la revendication précédente, **caractérisé en ce que** la matière excédentaire (24) prend la forme de la gorge (20) annulaire.

17. Procédé selon l'une des revendications précédentes, **caractérisé en ce que** le diamètre maximal de la tête (10) de la tige (7) est supérieur au diamètre nominal de la tige (7).

18. Procédé selon l'une des revendications précédentes, **caractérisé en ce qu'**il comporte une étape supplémentaire d'insertion de la tige (7) dans une cheminée (27) prévue à cet effet dans une membrane (4) souple appartenant à la pompe (1), ladite étape d'insertion étant réalisée entre l'étape d'injection et l'étape de correction de forme.

## Patentansprüche

1. Herstellungsverfahren eines Stabs (7) zum Führen für eine Pumpe (1) zur Abgabe eines flüssigen Produkts, wobei der Stab (7) einen zylindrischen Körper (9) umfasst, der von einem Kopf (10) überragt wird, wobei das Verfahren die folgenden Schritte umfasst:
- einen Gießschritt durch Kunststoffeinspritzung, um den zylindrischen Stab (7) zu bilden;
- einen Formkorrekturschritt, ohne Materialzugabe, eines oberen Endes (23) des Stabs (7), sodass der Kopf (10) gebildet wird, indem ein Anschlag (11) an dem Übergang zwischen dem Kopf (10) und dem Körper (9) des Stabs (7) geschaffen wird.

2. Verfahren nach dem vorstehenden Anspruch, **dadurch gekennzeichnet, dass** die Kunststoffeinspritzung aus einer einmaligen Einspritzung besteht.

3. Verfahren nach einem der vorstehenden Ansprüche, **dadurch gekennzeichnet, dass** die Kunststoffeinspritzung mithilfe einer Gussform aus einer einzigen Platte durchgeführt wird.

4. Verfahren nach einem der vorstehenden Ansprüche, **dadurch gekennzeichnet, dass** das Herausnehmen des Stabs (7) aus der Gussform in einem einzigen Arbeitsgang erfolgt.

5. Verfahren nach einem der vorstehenden Ansprüche, **dadurch gekennzeichnet, dass** die Form des Kopfs (10) des Stabs (7) durch Vernietung während des Formkorrekturschritts warm durchgeführt wird.

6. Verfahren nach dem vorstehenden Anspruch, **dadurch gekennzeichnet, dass** der Formkorrekturschritt eine Wärmphase des oberen Endes (23) des Stabs (7) bis zum Schmelzen des Kunststoffmaterials, dann eine Verdrängungsphase des schmelzflüssigen Materials umfasst.

7. Verfahren nach dem vorstehenden Anspruch, **dadurch gekennzeichnet, dass** während des Formkorrekturschritts durch Vernietung das obere Ende (23) des Stabs (7) mit einer wärmenden Oberfläche (16) eines Vernietungswerkzeugs (15) berührt wird, das eine mittlere Achse (X) aufweist, wobei der Stab (7) in der Verlängerung dieser Achse (X) angeordnet wird.

8. Verfahren nach dem vorstehenden Anspruch, **dadurch gekennzeichnet, dass** die wärmende Oberfläche (16) eben ist.

9. Verfahren nach Anspruch 7, **dadurch gekennzeichnet, dass** die wärmende Oberfläche (16) einen wärmenden Hohlraum (17) aufweist, in dem das obere Ende (23) des Stabs (7) eingefügt wird.

10. Verfahren nach dem vorstehenden Anspruch, **dadurch gekennzeichnet, dass** der Hohlraum (17) eine halbkugelförmige Form aufweist, um einen Kopf (10) mit halbkugelförmigem Erscheinungsbild zu bilden.

11. Verfahren nach einem der Ansprüche 7 bis 10, **dadurch gekennzeichnet, dass** während der Verdrängungsphase das Vernietungswerkzeug (15) gemäß der Achse (X) in Richtung des Stabs (7) verschoben wird, sodass ein Druck auf den Kopf (10) des schmelzflüssigen Stabs (7) ausgeübt wird, was eine Verlagerung des schmelzflüssigen Materials entlang des Körpers (9) des Stabs (7) in der Richtung der Verlagerung des Vernietungswerkzeugs (15) bewirkt, sodass der Anschlag (11) zwischen dem Kopf (10) und dem Körper (9) des Stabs (7) gebildet wird.

12. Verfahren nach dem vorstehenden Anspruch, **dadurch gekennzeichnet, dass** der Körper (9) des Stabs (7) in einer Backe (30) geklemmt wird und das obere Ende (23) des Stabs (7) von dem Vernietungswerkzeug (15) verdrängt wird, bis die Unterseite des sich bildenden Kopfs auf einer ebenen Oberseite der Backe (30) derart zerdrückt wird, dass die Unterseite des Kopfs eben wird und den Anschlag (11) bildet.

13. Verfahren nach einem der Ansprüche 1 bis 4, **dadurch gekennzeichnet, dass** der Form des Kopfs (10) des Stabs (7) durch Verdrängung des Materials des oberen Endes (23) des Stabs (7) während des Formkorrekturschritts kalt durchgeführt wird.

14. Verfahren nach dem vorstehenden Anspruch, **dadurch gekennzeichnet, dass** das obere Ende (23) des Stabs (7) gegenüber einem Verdrängungswerkzeug (18) angeordnet ist, das aus einem härteren Material als Kunststoff gestaltet ist, vom Metalltyp, und dessen Oberfläche (19) gegenüber dem oberen Ende (23) des Stabs (7) eine schneidende ringförmige Rippe (22) aufweist, mit einem Durchmesser, der kleiner ist als der Nenndurchmesser des Stabs (7), sowie eine ringförmige Nut (20), die die ringförmige Rippe (22) umgibt, wobei das Verdrängungswerkzeug (18) eine mittlere Achse (X) aufweist, wobei der Stab (7) in der Verlängerung dieser Achse (X) angeordnet ist.

15. Verfahren nach dem vorstehenden Anspruch, **dadurch gekennzeichnet, dass** das Verdrängungswerkzeug (18) gemäß der Achse (X) in Richtung des Stabs (7) verschoben wird, bis das Material am oberen Ende (23) des Stabs (7) gemäß einer vordefinierten Bahn durchschnitten wird, wobei das ausgeschnittene überschüssige Material (24) in der ringförmigen Nut (20) des Verdrängungswerkzeugs (18) aufgenommen wird, sodass der Kopf (10) des Stabs (7) mit einem Anschlag (11) in Bezug auf den Körper (9) gebildet wird.

16. Verfahren nach dem vorstehenden Anspruch, **dadurch gekennzeichnet, dass** das überschüssige Material (24) die Form der ringförmigen Nut (20) annimmt.

17. Verfahren nach einem der vorstehenden Ansprüche, **dadurch gekennzeichnet, dass** der Höchstdurchmesser des Kopfs (10) des Stabs (7) größer ist als der Nenndurchmesser des Stabs (7).

18. Verfahren nach einem der vorstehenden Ansprüche, **dadurch gekennzeichnet, dass** es einen zusätzlichen Schritt des Einfügens des Stabs (7) in einen zu diesem Zweck vorgesehenen Schacht (27) in eine nachgiebige Membran (4) umfasst, die zu der Pumpe (1) gehört, wobei der Schritt des Einfügens zwischen dem Einspritzschritt und dem Formkorrekturschritt durchgeführt wird.

## Claims

1. Method of manufacturing a guide rod (7) for a pump (1) for dispensing a fluid product, said rod (7) comprising a cylindrical body (9) surmounted by a head (10), said method comprising the following steps:
- a plastic injection moulding step to form the cylindrical rod (7);
- a step for correcting the shape, without the addition of materials, of an upper end (23) of the rod (7) so as to form said head (10) by creating a shoulder (11) at the junction between the head (10) and body (9) of the rod (7).

2. Method according to the preceding claim, **characterised in that** the plastic injection consists of a single injection.

3. Method according to one of the preceding claims, **characterised in that** the plastic injection is carried out by means of a mould with a single plate.

4. Method according to one of the preceding claims, **characterised in that** the release of the rod (7) is carried out in a single operation.

5. Method according to one of the preceding claims, **characterised in that** the shape of the head (10) of the rod (7) is hot worked by rolling during the shape correction step.

6. Method according to the preceding claim, **characterised in that** the shape correction step comprises a phase of heating the upper end (23) of the rod (7) until the plastic material melts, then a phase of embossing the molten material.

7. Method according to the preceding claim, **characterised in that**, during the shape correction step by rolling, the upper end (23) of the rod (7) is brought into contact with a heating surface (16) of a rolling tool (15) having a central axis (X), said rod (7) being arranged in the extension of this axis (X).

8. Method according to the preceding claim, **characterised in that** the heating surface (16) is flat.

9. Method according to claim 7, **characterised in that** the heating surface (16) has a heating cavity (17) into which the upper end (23) of the rod (7) is inserted.

10. Method according to the preceding claim, **characterised in that** said cavity (17) has a hemispherical shape to form a hemispherical head (10).

11. Method according to one of claims 7 to 10, **characterised in that**, during the embossing phase, the rolling tool (15) moves in translation along the axis (X) in the direction of the rod (7) so as to exert pressure on the head (10) of the molten rod (7), causing a displacement of the molten material along the body (9) of the rod (7) in the direction of movement of the rolling tool (15) so as to form the shoulder (11) between the head (10) and body (9) of the rod (7).

12. Method according to the preceding claim, **characterised in that** the body (9) of the rod (7) is clamped into a die (30), and the upper end (23) of the rod (7) is embossed by the rolling tool (15) until the lower side of the head being formed impacts on an upper flat side of the die (30), so that the lower side of the head is flat and forms said shoulder (11).

13. Method according to one of claims 1 to 4, **characterised in that** the shape of the head (10) of the rod (7) is cold worked by embossing the material from the upper end (23) of the rod (7) during the shape correction step.

14. Method according to the preceding claim, **characterised in that** the upper end (23) of the rod (7) is arranged opposite an embossing tool (18) designed in a material more resistant than plastic, of the metal type, and whose surface (19) facing the upper end (23) of the rod (7) has a sharp annular edge (22) with a diameter less than the nominal diameter of the rod (7), as well as an annular groove (20) surrounding the annular edge (22), the embossing tool (18) having a central axis (X), said rod (7) being arranged in the extension of this axis (X).

15. Method according to the preceding claim, **characterised in that** the embossing tool (18) moves in translation along the axis (X) in the direction of the rod (7) until the material is cut from the upper end (23) of the rod (7) according to a predefined stroke, the cut excess material (24) becoming housed in the annular groove (20) of the embossing tool (18) so as to form the head (10) of the rod (7) with a shoulder (11) relative to the body (9).

16. Method according to the preceding claim, **characterised in that** the excess material (24) forms the annular groove (20).

17. Method according to one of the preceding claims, **characterised in that** the maximum diameter of the head (10) of the rod (7) is greater than the nominal diameter of the rod (7).

18. Method according to one of the preceding claims, **characterised in that** it comprises an additional step of inserting the rod (7) into a chimney (27) provided for this purpose in a flexible membrane (4) belonging to the pump (1), said insertion step being carried out between the injection step and the shape correction step.
